# EUROPÄISCHE PATENTANMELDUNG

(11) **EP 4 786 290 A1**
(43) Veröffentlichungstag der Anmeldung: **05.08.2026**
(21) Anmeldenummer: 25224924.8
(22) Anmeldetag: 18.12.2025
(51) Int. Cl.: B60T 13/66, B60T 17/22, B60T 8/17, B60T 8/32

(54) **MEHRGLIEDRIGES SCHIENENFAHRZEUG SOWIE VERFAHREN UND KOMPONENTEN ZU DESSEN BETRIEB**

(30) Priorität: 30.01.2025 DE 102025103496
(71) Anmelder: Siemens Mobility GmbH, 80997 München (DE)
(72) Erfinder: Buchkremer, Cornelius, 91058 Erlangen (DE); Seeberger, Stefan, 91058 Erlangen (DE)
(74) Vertreter: Siemens Patent Attorneys

(57) **Zusammenfassung**

Die Erfindung bezieht sich unter anderem auf ein mehrgliedriges Schienenfahrzeug (SF). Erfindungsgemäß ist diesbezüglich vorgesehen, dass das Schienenfahrzeug (SF) eine erste Wagengruppe (WG1), die einen oder mehr Triebwagen (TR1) und einen oder mehr Laufwagen umfasst, sowie eine zweite Wagengruppe (WG2) aufweist, der ersten Wagengruppe (WG1) eine Master-Schnellbremssteuereinrichtung (MSB1) zugeordnet ist, die dazu ausgestaltet ist, bei Vorliegen eines Schnellbremsbefehls (SBB) eine die aktuell erzeugte elektrodynamische Bremskraft des oder der Triebwagen (TR1) der ersten Wagengruppe (WG1) angebende elektrodynamische Bremskraftangabe (EDBA) zu ermitteln, anhand dieser eine Reduktionsangabe (RA1) zu ermitteln, die angibt, um wieviel der ersten Wagengruppe (WG1) zugeordnete Reibungsbremsen weniger gebremst werden müssen, als dies bei einem Ausfall der elektrodynamischen Bremskraft erforderlich wäre, und die Reduktionsangabe (RA1) an Slave-Schnellbremssteuereinrichtungen (SSB1), die den Reibungsbremsen der ersten Wagengruppe (WG1) zugeordnet sind, zu übermitteln, und die den Reibungsbremsen zugeordneten Slave-Schnellbremssteuereinrichtungen (SSB1) dazu ausgestaltet sind, die Reduktionsangabe (RA1) bei der Ansteuerung der Reibungsbremsen zu berücksichtigen.

## Beschreibung

Die Erfindung bezieht sich auf ein mehrgliedriges Schienenfahrzeug, ein Verfahren zum Bremsen eines mehrgliedrigen Schienenfahrzeugs, eine Master-Schnellbremssteuereinrichtung für ein solches mehrgliedriges Schienenfahrzeug sowie eine Slave-Schnellbremssteuereinrichtung für ein solches mehrgliedriges Schienenfahrzeug.

Im Eisenbahnbetrieb ist bei herkömmlichen Schnellbremsverfahren vorgesehen, dass die zur Verfügung stehenden Reibungsbremsen mit einer für den Schnellbremsvorgang vorgegebenen Bremsverzögerung, also mit einer zu der jeweils zu bremsenden Masse passenden Bremskraft, gebremst werden. Etwaig zur Verfügung stehende elektrodynamische Bremskraft bleibt dabei meist unberücksichtigt. Grund dafür scheint unter anderem zu sein, dass es schwierig sein kann, die elektrodynamische Bremskraft entsprechend den Anforderungen in der Sicherheitsanalyse einzubinden.

Bei Betriebsbremsverfahren, bei denen im Vergleich zur Schnellbremsung geringere Sicherheitsstandards erfüllt werden müssen, ist der Sicherheitsnachweis hingegen einfacher zu erbringen, sodass dort elektrodynamische Bremskraft bereits bekanntermaßen vorrangig genutzt wird.

Der Erfindung liegt die Aufgabe zugrunde, ein Schienenfahrzeug anzugeben, das eine Schnellbremsung unter Einschluss elektrodynamischer Bremsenergie erlaubt sowie es aufwandsarm ermöglicht, den Nachweis für die Erfüllung von für die Schnellbremsung vorgesehenen Sicherheitsstandards zu führen.

Diese Aufgabe wird erfindungsgemäß durch ein Schienenfahrzeug mit den Merkmalen gemäß Patentanspruch 1 gelöst. Vorteilhafte Ausgestaltungen des erfindungsgemäßen Schienenfahrzeugs sind in Unteransprüchen angegeben.

Danach ist erfindungsgemäß vorgesehen, dass das Schienenfahrzeug eine erste Wagengruppe, die einen oder mehr Triebwagen und einen oder mehr Laufwagen umfasst, sowie eine zweite Wagengruppe aufweist, der ersten Wagengruppe eine Master-Schnellbremssteuereinrichtung zugeordnet ist, die dazu ausgestaltet ist, bei Vorliegen eines Schnellbremsbefehls eine die aktuell erzeugte elektrodynamische Bremskraft des oder der Triebwagen der ersten Wagengruppe angebende elektrodynamische Bremskraftangabe zu ermitteln, anhand dieser eine Reduktionsangabe zu ermitteln, die angibt, um wieviel der ersten Wagengruppe zugeordnete Reibungsbremsen weniger gebremst werden müssen, als dies bei einem Ausfall der elektrodynamischen Bremskraft erforderlich wäre, und die Reduktionsangabe an Slave-Schnellbremssteuereinrichtungen, die den Reibungsbremsen der ersten Wagengruppe zugeordnet sind, zu übermitteln, und die den Reibungsbremsen zugeordneten Slave-Schnellbremssteuereinrichtungen dazu ausgestaltet sind, die Reduktionsangabe bei der Ansteuerung der Reibungsbremsen zu berücksichtigen.

Ein wesentlicher Vorteil der erfindungsgemäßen Lösung ist darin zu sehen, dass - im Falle einer Schnellbremsung und bei Vorliegen von elektrodynamischer Bremskraft - keine zentrale zugweite bzw. schienenfahrzeugübergreifende Reduktion der Reibungsbremskraft vorgesehen wird; stattdessen erfolgt eine wagengruppenindividuelle Steuerung der Reibungsbremskraft unter Berücksichtigung der elektrodynamischen Bremskraft der jeweiligen Wagengruppe. Für einzelne Wagengruppen des Schienenfahrzeugs lässt sich viel einfacher als für das gesamte Schienenfahrzeug nachweisen, dass das jeweils implementierte Bremssteuerverfahren für die Schnellbremsung vorgegebene Sicherheitsstandards erfüllt; dies gilt insbesondere für Schienenfahrzeuge mit einer besonders großen Zahl an Wagen.

Die Wagen der ersten Wagengruppe können sich beispielsweise paarweise ein Drehgestell teilen, wenn es sich bei dem Schienenfahrzeug zum Beispiel um einen Gliederzug handelt.

Vorteilhaft ist es, wenn die den Reibungsbremsen zugeordneten Slave-Schnellbremssteuereinrichtungen die Reduktionsangabe bei der Ansteuerung ihrer Reibungsbremsen berücksichtigen, indem sie die Reduktionsangabe von einer Sollvorgabe abziehen.

Vorteilhaft ist es, wenn die Master-Schnellbremssteuereinrichtung als Softwaremodul in einem zugeordneten Schnellbremssteuergerät implementiert ist.

Die Master-Schnellbremssteuereinrichtung ist vorzugsweise in dem oder einem der Triebwagen der ersten Wagengruppe angeordnet.

Die erste Wagengruppe umfasst vorzugsweise genau einen einzigen Triebwagen. Vorteilhaft ist es, wenn die Master-Schnellbremssteuereinrichtung in einem in dem Triebwagen angeordneten Schnellbremssteuergerät integriert ist.

Vorteilhaft ist es, wenn die Slave-Schnellbremssteuereinrichtungen jeweils als Softwaremodul in einem zugeordneten Schnellbremssteuergerät implementiert sind.

Auch ist es von Vorteil, wenn die erste Wagengruppe genau zwei Wagen umfasst, nämlich einen Triebwagen und einen daran angekoppelten Laufwagen, wobei in dem Laufwagen ein Transformator angeordnet ist, der elektrisch mit dem Triebwagen in Verbindung steht. Eine solche Wagengruppe kann ein hohes Gewicht haben, sodass sich die Berücksichtigung elektrodynamischer Bremsenergie mit Blick auf den Verschleiß der Reibungsbremsen besonders lohnt; gleichzeitig kann das Erbringen eines Sicherheitsnachweises für eine solche Wagengruppe vereinfacht möglich sein.

Bezüglich der zweiten Wagengruppe wird es als vorteilhaft angesehen, wenn die zweite Wagengruppe ebenfalls einen oder mehr Triebwagen, einen oder mehr Laufwagen sowie eine zweite, unabhängig von der ersten Master-Schnellbremssteuereinrichtung arbeitende Master-Schnellbremssteuereinrichtung aufweist, wobei die zweite Master-Schnellbremssteuereinrichtung dazu ausgestaltet ist, bei Vorliegen des Schnellbremsbefehls eine die aktuell erzeugte elektrodynamische Bremskraft des oder der Triebwagen der zweiten Wagengruppe angebende zweite elektrodynamische Bremskraftangabe zu ermitteln, anhand dieser eine zweite Reduktionsangabe zu ermitteln, die angibt, um wieviel der zweiten Wagengruppe zugeordnete Reibungsbremsen weniger gebremst werden müssen, als dies bei einem Ausfall der elektrodynamischen Bremskraft der zweiten Wagengruppe erforderlich wäre, und die zweite Reduktionsangabe an Slave-Schnellbremssteuereinrichtungen, die den Reibungsbremsen der zweiten Wagengruppe zugeordnet sind, zu übermitteln, und die Slave-Schnellbremssteuereinrichtungen, die den Reibungsbremsen der zweiten Wagengruppe zugeordnet sind, die zweite Reduktionsangabe bei der Ansteuerung ihrer Reibungsbremsen berücksichtigen, indem sie die zweite Reduktionsangabe von der Sollvorgabe abziehen.

Bei der zuletzt beschriebenen Ausgestaltung erfolgt also die Berücksichtigung elektrodynamischer Bremsenergie für die erste und die zweite Wagengruppe jeweils gruppenautark, sodass der Sicherheitsnachweis nur für die jeweiligen Wagengruppen erbracht werden muss.

Die zweite Wagengruppe umfasst vorzugsweise genau einen einzigen Triebwagen.

Alternativ kann vorgesehen sein, dass die zweite Wagengruppe ausschließlich Laufwagen umfasst.

Auch kann in vorteilhafter Weise vorgesehen sein, dass das Schienenfahrzeug eine oder mehr dritte Wagengruppen aufweist, wobei jede der dritten Wagengruppen jeweils einen oder mehr Triebwagen, einen oder mehr Laufwagen sowie eine Master-Schnellbremssteuereinrichtung aufweist, und wobei die Master-Schnellbremssteuereinrichtungen der dritten Wagengruppen bezüglich der Erzeugung einer Reduktionsangabe jeweils vergleichbar arbeiten wie die Master-Schnellbremssteuereinrichtung der ersten oder zweiten Wagengruppe, und wobei Slave-Schnellbremssteuereinrichtungen der dritten Wagengruppen die Reduktionsangabe jeweils bei der Ansteuerung ihrer Reibungsbremsen berücksichtigen, indem sie die Reduktionsangabe von der Sollvorgabe abziehen.

Bezüglich der letztgenannten Ausgestaltung gelten die obigen Ausführungen im Zusammenhang mit der ersten und zweiten Wagengruppe entsprechend.

Auch ist es von Vorteil, wenn den Slave-Schnellbremseinrichtungen für den Fall einer Schnellbremsung jeweils zumindest zwei unterschiedliche Bremskraft- oder Verzögerungsangaben zugeordnet sind, nämlich eine erste für den Fall, dass alle Wagen aktiv bremsen, und eine zweite für den Fall, dass alle Wagen bis auf einen aktiv bremsen.

Auch kann es von Vorteil sein, wenn den Slave-Schnellbremseinrichtungen für den Fall einer Schnellbremsung jeweils zumindest zwei unterschiedliche Bremskraft- oder Verzögerungsangaben zugeordnet sind, nämlich eine erste für den Fall, dass alle Wagen aktiv bremsen, und eine zweite für den Fall einer akzeptierten Vorgabe.

Das oben beschriebene Konzept einer gruppenindividuellen Schnellbremssteuerung ist besonders bei Schienenfahrzeugen mit einer hohen Anzahl an Wagen mit Blick auf das Erbringen der genannten Sicherheitsnachweise vorteilhaft; aus diesem Grunde wird es als vorteilhaft angesehen, wenn die Wagenzahl des Schienenfahrzeugs mindestens 6 und die Anzahl der Wagengruppen mindestens zwei beträgt.

Die Erfindung bezieht sich außerdem auf ein Verfahren zum Bremsen eines mehrgliedrigen Schienenfahrzeugs. Bezüglich eines solchen Verfahrens ist erfindungsgemäß vorgesehen, dass bei Vorliegen eines Schnellbremsbefehls eine elektrodynamische Bremskraftangabe ermittelt wird, die eine aktuell erzeugte elektrodynamische Bremskraft einer ersten Wagengruppe eines mehr als eine Wagengruppe aufweisenden Schienenfahrzeugs angibt, anhand dieser eine Reduktionsangabe ermittelt wird, die angibt, um wieviel der ersten Wagengruppe zugeordnete Reibungsbremsen weniger gebremst werden müssen, als dies bei einem Ausfall der elektrodynamischen Bremskraft der ersten Wagengruppe erforderlich wäre, die Reduktionsangabe an Slave-Schnellbremssteuereinrichtungen, die den Reibungsbremsen der ersten Wagengruppe zugeordnet sind, übermittelt wird, und die Slave-Schnellbremssteuereinrichtungen die Reduktionsangabe bei der Ansteuerung der Reibungsbremsen berücksichtigen.

Bezüglich der Vorteile des erfindungsgemäßen Verfahrens und dessen vorteilhafter Ausgestaltungen gelten die obigen Ausführungen im Zusammenhang mit dem erfindungsgemäßen Schienenfahrzeug und dessen vorteilhafter Ausgestaltungen entsprechend.

Die Erfindung bezieht sich außerdem auf eine Master-Schnellbremssteuereinrichtung, beispielsweise für ein Schienenfahrzeug wie oben beschrieben. Erfindungsgemäß ist bezüglich der Master-Schnellbremssteuereinrichtung vorgesehen, dass sie für die Steuerung einer Wagengruppe, die einen oder mehr Triebwagen und einen oder mehr Laufwagen umfasst, derart ausgestaltet ist, dass sie eine aktuell erzeugte elektrodynamische Bremskraft des oder der Triebwagen der Wagengruppe angebende elektrodynamische Bremskraftangabe ermittelt, anhand dieser eine Reduktionsangabe ermittelt, die angibt, um wieviel der Wagengruppe zugeordnete Reibungsbremsen weniger gebremst werden müssen, als dies bei einem Ausfall der elektrodynamischen Bremskraft erforderlich wäre, und die Reduktionsangabe an Slave-Schnellbremssteuereinrichtungen, die den Reibungsbremsen der Wagengruppe zugeordnet sind, übermittelt.

Die Erfindung bezieht sich außerdem auf eine Slave-Schnellbremssteuereinrichtung, beispielsweise für ein Schienenfahrzeug wie oben beschrieben. Erfindungsgemäß ist bezüglich der Slave-Schnellbremssteuereinrichtung vorgesehen, dass sie für die Steuerung einer Wagengruppe, die einen oder mehr Triebwagen und einen oder mehr Laufwagen umfasst, derart ausgestaltet ist, dass sie eine von einer Master-Schnellbremssteuereinrichtung empfangene Reduktionsangabe beim Ansteuern ihrer Reibungsbremsen berücksichtigt, indem sie deren Bremskraft entsprechend der Reduktionsangabe reduziert.

Die Erfindung bezieht sich außerdem auf ein Computerprogrammprodukt, das Programmbefehle enthält, die bei Ausführung durch eine Recheneinrichtung diese veranlassen, eine Master-Schnellbremssteuereinrichtung, beispielsweise eine solche wie oben beschrieben, oder eine Slave-Schnellbremssteuereinrichtung, beispielsweise eine solche wie oben beschrieben, zu bilden.

Die Erfindung wird nachfolgend anhand von Ausführungsbeispielen näher erläutert; dabei zeigen beispielhaft:
- Fig. 1: ein Ausführungsbeispiel für ein erfindungsgemäßes mehrgliedriges Schienenfahrzeug, anhand dessen Ausführungsbeispiele für erfindungsgemäße Verfahren erläutert werden,
- Fig. 2: eine erste Wagengruppe des Schienenfahrzeugs gemäß Figur 1 näher im Detail,
- Fig. 3: ein Ausführungsbeispiel für eine erfindungsgemäße Master-Schnellbremssteuereinrichtung näher im Detail und
- Fig. 4: ein Ausführungsbeispiel für eine erfindungsgemäße Slave-Schnellbremssteuereinrichtung näher im Detail.

In den Figuren werden der Übersicht halber für identische oder vergleichbare Komponenten stets dieselben Bezugszeichen verwendet.

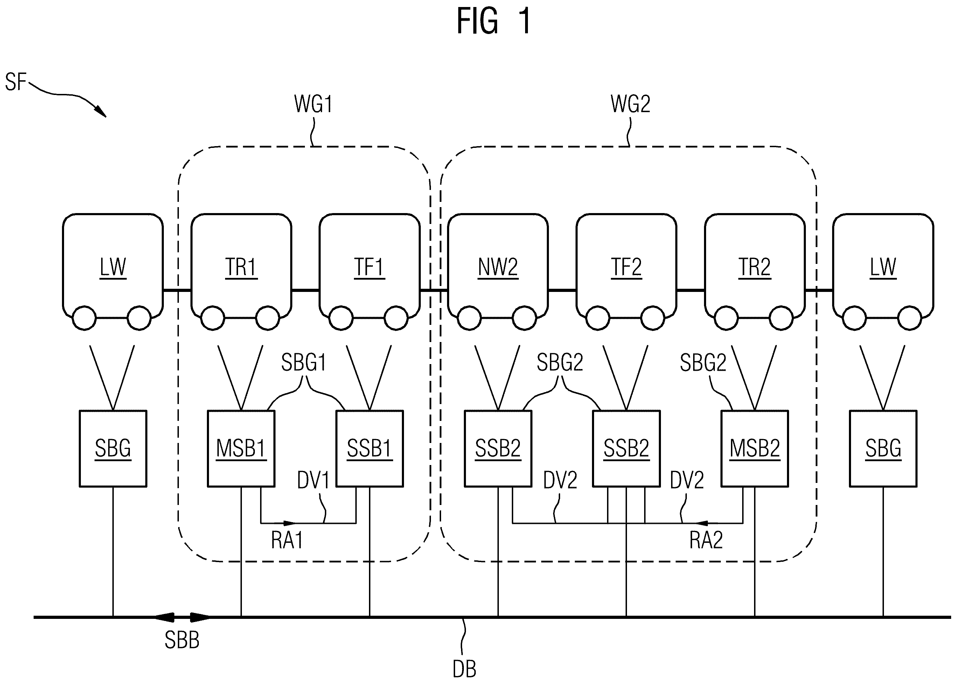

Die Figur 1 zeigt ein Ausführungsbeispiel für ein erfindungsgemäßes mehrgliedriges Schienenfahrzeug SF, das insgesamt sieben Wagen umfasst, wobei die Anzahl von sieben eine völlig beliebige Zahl darstellt und die nachfolgende Zuordnung der Wagen zu Wagengruppen auch anders gewählt werden kann.

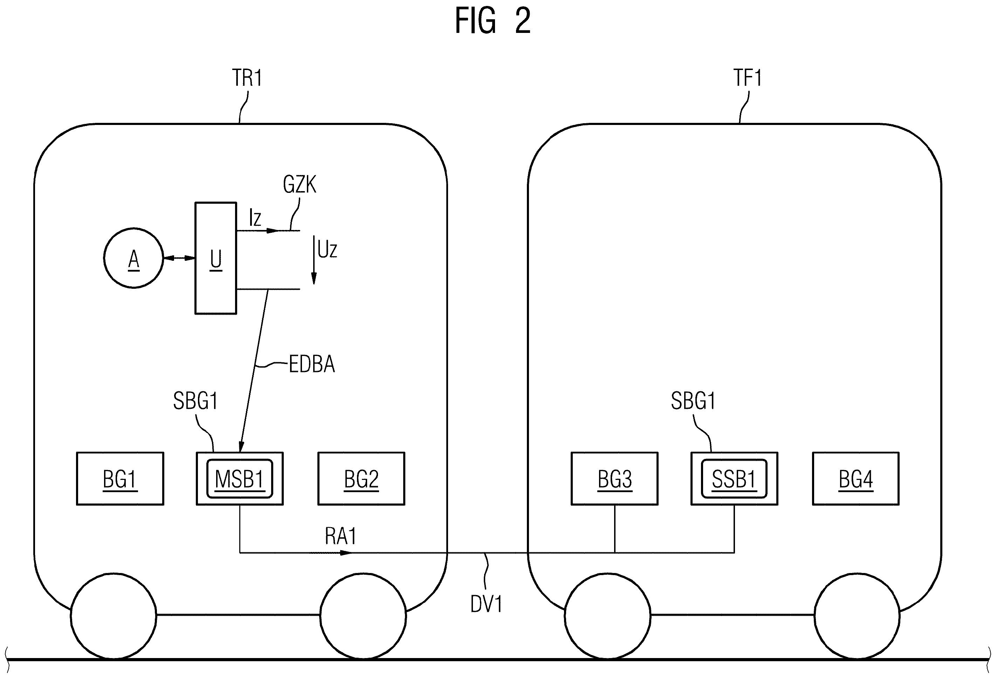

Der in der Figur 1 von links gezählt zweite und dritte Wagen bilden bei dem Ausführungsbeispiel gemäß Figur 1 eine erste Wagengruppe WG1, wobei es sich bei dem zweiten Wagen beispielsweise um einen Triebwagen TR1 und bei dem dritten Wagen beispielsweise um einen mit diesem unmittelbar gekoppelten Laufwagen in Form eines Transformatorlaufwagens TF1 handelt. Wie weiter unten näher im Detail erläutert wird, erfolgt im Falle eines Schnellbremsbetriebs eine gruppenindividuelle Ermittlung und Steuerung der Bremskraft der Reibungsbremsen der ersten Wagengruppe WG1 in Abhängigkeit von dem Vorhandensein und dem Umfang elektrodynamischer Bremskraft eines Antriebs A (vgl. Figur 2) des Triebwagens TR1 der ersten Wagengruppe WG1.

Der vierte bis sechste Wagen bilden bei dem Ausführungsbeispiel gemäß Figur 1 eine zweite Wagengruppe WG2, die einen Triebwagen TR2 und zwei Laufwagen umfasst, von denen der unmittelbar an den Triebwagen TR2 angekoppelte Laufwagen beispielsweise ein Transformatorlaufwagen TF2 sein kann und der andere ein Nichttransformatorlaufwagen NW2. Wie weiter unten näher im Detail erläutert wird, erfolgt im Falle eines Schnellbremsbetriebs eine gruppenindividuelle Ermittlung und Steuerung der Bremskraft der Reibungsbremsen der zweiten Wagengruppe WG2 in Abhängigkeit von dem Vorhandensein und dem Umfang elektrodynamischer Bremskraft eines Antriebs des Triebwagens TR2 der zweiten Wagengruppe WG2.

Bei dem ersten Wagen und dem letzten Wagen handelt es sich bei dem Ausführungsbeispiel gemäß Figur 1 um Einzelwagen, beispielsweise Laufwagen LW, deren Reibungsbremsen unabhängig von dem jeweiligen Bremsbetrieb der anderen Wagen von autark arbeitenden Schnellbremssteuergeräten SBG gesteuert werden.

In der Figur 1 ist außerdem ein sich durch das Schienenfahrzeug SF erstreckender, zugweiter Datenbus DB gezeigt, über den sich ein Schnellbremsbefehl SBB zu allen Wagen des Schienenfahrzeugs SF übertragen lässt. Der in der Figur 1 erste und letzte Wagen verarbeiten den Schnellbremsbefehl in üblicher Weise ohne Berücksichtigung der Arbeitsweise der anderen Wagen.

Darüber hinaus sind in der Figur 1 eine erste gruppenindividuelle Datenverbindung DV1 zwischen dem Triebwagen TR1 der ersten Wagengruppe WG1 und dem Transformatorlaufwagen TF1 der ersten Wagengruppe WG1 und eine zweite gruppenindividuelle Datenverbindung DV2 zwischen dem Triebwagen TR2 und den zwei Laufwagen der zweiten Wagengruppe WG2 dargestellt. Diese gruppenindividuellen Datenverbindungen DV1 und DV2 können technisch über den bereits erwähnten zugweiten Datenbus DB hergestellt werden; alternativ können für die gruppenindividuellen Datenverbindungen DV1 und DV2 zusätzliche Datenleitungen vorgesehen werden.

Die Figur 2 zeigt Bestandteile des Triebwagens TR1 und des Transformatorlaufwagens TF1 der ersten Wagengruppe WG1 näher im Detail.

Der Triebwagen TR1 umfasst neben vielen anderen Komponenten einen Antrieb A und ein Schnellbremssteuergerät SBG1. Das Schnellbremssteuergerät SBG1 des Triebwagens TR1 dient zur Steuerung des Motorbremsbetriebs und zur Steuerung nicht weiter dargestellter Reibungsbremsen des Triebwagens TR1 während eines Schnellbremsbetriebs, bei dem beispielsweise in einem Notfall ein besonders kurzer Bremsweg erreicht werden soll.

In dem Schnellbremssteuergerät SBG1 des Triebwagens TR1 ist eine Master-Schnellbremssteuereinrichtung MSB1 integriert, beispielsweise in Form eines Softwaremoduls, die bzw. das dazu ausgestaltet ist, bei Vorliegen des zugweit vorliegenden Schnellbremsbefehls SBB eine die aktuell erzeugte elektrodynamische Bremskraft des Antriebs A des Triebwagens TR1 angebende elektrodynamische Bremskraftangabe EDBA zu ermitteln. Alternativ können die beschriebenen Steuerungsfunktionen auch auf mehrere Geräten aufgeteilt werden.

Die Master-Schnellbremssteuereinrichtung MSB1 kann die elektrodynamische Bremskraftangabe EDBA beispielsweise ermitteln, indem sie die von dem elektrischen Antrieb A in einen über einen Umrichter U an den Antrieb A angeschlossenen Gleichspannungszwischenkreis GZK eingespeiste elektrische Bremsleistung auswertet. Beispielsweise kann die Master-Schnellbremssteuereinrichtung MSB1 Spannungsmesswerte, die die an dem Gleichspannungszwischenkreis GZK anliegende Zwischenkreisspannung Uz angeben, und Strommesswerte, die den von dem Antrieb A in den Gleichspannungszwischenkreis GZK eingespeisten Motorstrom Iz angeben, multiplizieren und damit die elektrische Motorbremsleistung berechnen. Mit der berechneten Motorbremsleistung kann sie anschließend unter Berücksichtigung der jeweiligen Geschwindigkeit des Schienenfahrzeugs SF die elektrodynamische Bremskraftangabe EDBA errechnen; bezüglich dieser Berechnung können bekannte Verfahren verwendet werden.

Anhand dieser elektrodynamischen Bremskraftangabe EDBA ermittelt die Master-Schnellbremssteuereinrichtung MSB1 eine Reduktionsangabe RA1, die angibt, um wieviel die der ersten Wagengruppe WG1 zugeordneten Reibungsbremsen weniger gebremst werden müssen, als dies bei einem kompletten Ausfall der elektrodynamischen Bremskraft oder Nichtbetrieb des Antriebs A als Motorbremse erforderlich wäre.

Nachfolgend wird zur Erläuterung einer bevorzugten Arbeitsweise der Master-Schnellbremssteuereinrichtung MSB1 beispielhaft davon ausgegangen, dass die Reibungsbremsen der ersten Wagengruppe WG1 ohne einen Bremsbeitrag des Antriebs A, also beispielsweise bei einem kompletten Ausfall des Antriebs A, eine Standardverzögerung von zum Beispiel 1,2 m/s2 bewirken und eine dementsprechende Reibungssollbremskraft erzielen sollen, um die für eine Schnellbremsung vorgegebenen Sollvorgaben zu erfüllen.

Wenn der Antrieb A nun aktiv mitbremst, beispielsweise eine Bremskraft ausübt, die einer Verzögerung von 0,6 m/s2 der ersten Wagengruppe WG1 entspricht, also die Motorbremskraft bzw. elektrodynamische Bremskraft die Hälfte der gesamten erforderlichen Bremskraft für die erste Wagengruppe WG1 zur Verfügung stellt, so kann die Bremskraft der Reibungsbremsen der ersten Wagengruppe WG1 entsprechend reduziert werden, und zwar bei dem obigen Zahlenbeispiel um die Hälfte.

Die Master-Schnellbremssteuereinrichtung MSB1 ermittelt demgemäß eine Reduktionsangabe RA1, die diese Reduktion um die Hälfte beschreibt, beispielsweise in Form eines Zahlenwertes von 50 %. Die Reduktionsangabe RA1 kann dabei angeben, um wieviel die Bremsverzögerung gegenüber der Standardverzögerung von 1,2 m/s2 verringert werden kann bzw. soll oder alternativ, wieviel Bremsverzögerung die Reibungsbremsen noch bewirken müssen, um die für die Schnellbremsung der ersten Wagengruppe WG1 nötige Gesamtbremskraft zu erreichen.

Die so ermittelte Reduktionsangabe RA1 berücksichtigt die Master-Schnellbremssteuereinrichtung MSB1 bei der Ansteuerung der Reibungsbremsen des Triebwagens TR1, die ihr zugeordnet sind, und reduziert deren Bremskraft entsprechend.

Darüber hinaus übermittelt die Master-Schnellbremssteuereinrichtung MSB1 die ermittelte Reduktionsangabe RA1 an eine in dem Transformatorlaufwagen TF1 angeordnete Slave-Schnellbremssteuereinrichtung SSB1, die in einem Schnellbremssteuergerät SBG1 des Transformatorlaufwagens TF1 integriert ist. Das Schnellbremssteuergerät SBG1 des Transformatorlaufwagens TF1 dient zur Steuerung nicht weiter dargestellter Reibungsbremsen des Transformatorlaufwagens TF1 während des Schnellbremsbetriebs.

Die Slave-Schnellbremssteuereinrichtung SSB1 berücksichtigt die von der Master-Schnellbremssteuereinrichtung MSB1 empfangene Reduktionsangabe RA1, indem sie die ihr zugeordneten Reibungsbremsen, also die Reibungsbremsen des Transformatorlaufwagens TF1, nun nicht mehr mit einer der Standardverzögerung von 1,2 m/s2 entsprechenden Bremskraft bremst, sondern mit einer entsprechend reduzierten Bremskraft.

Die Übermittlung der Reduktionsangabe RA1 von der Master-Schnellbremssteuereinrichtung MSB1 zu der Slave-Schnellbremssteuereinrichtung SSB1 kann über die in der Figur 1 gezeigte gruppenindividuelle Datenverbindung DV1 erfolgen, die beispielsweise durch einen CAN-Busbereitgestellt werden kann oder einen solchen einschließen kann, oder den zugweiten Datenbus DB.

In der Figur 2 sind darüber noch Betriebsbremsgeräte gezeigt, die in dem Triebwagen TR1 und dem Transformatorlaufwagen TF1 angeordnet sind.

Das in der Figur 2 linke Betriebsbremsgerät BG1 des Triebwagens TR1 dient zur Steuerung der Reibungsbremsen eines ersten Laufwerks des Triebwagens TR1 während normaler betrieblicher Bremsvorgänge und das in der Figur 2 rechte Betriebsbremsgerät BG2 zur Steuerung der Reibungsbremsen eines zweiten Laufwerks des Triebwagens TR1 während normaler betrieblicher Bremsvorgänge.

Entsprechend gilt für die Betriebsbremsgeräte BG3 und BG4 des Transformatorlaufwagens TF1: Das in der Figur 2 linke Betriebsbremsgerät BG3 des Transformatorlaufwagens TF1 dient zur Steuerung der Reibungsbremsen eines ersten Laufwerks des Transformatorlaufwagens TF1 und das in der Figur 2 rechte Betriebsbremsgerät BG4 des Transformatorlaufwagens TF1 dient zur Steuerung der Reibungsbremsen eines zweiten Laufwerks des Transformatorlaufwagens TF1 während normaler betrieblicher Bremsvorgänge.

Die Datenverbindung DV1 zwischen der Master-Schnellbremssteuereinrichtung MSB1 und der Slave-Schnellbremssteuereinrichtung SSB1 erfolgt bei dem Ausführungsbeispiel gemäß Figur 2 unter Einbezug des linken Betriebsbremsgeräts BG3 des Transformatorlaufwagens TF1, jedoch ist dieser Einbezug nicht zwingend erforderlich.

Wieder bezugnehmend auf Figur 1 ist erkennbar, dass es die bereits angesprochene zweite gruppenindividuelle Datenverbindung DV2 zwischen einer in einem Schnellbremssteuergerät SBG2 des zweiten Triebwagens TR2 der zweiten Wagengruppe WG2 und Slave-Schnellbremssteuereinrichtungen SSB2 in Schnellbremsgeräten SBG2 der Laufwagen der zweiten Wagengruppe WG2 ermöglicht, eine bezogen auf die zweite Wagengruppe WG2 ermittelte zweite gruppenindividuelle Reduktionsangabe RA2 an die Slave-Schnellbremssteuereinrichtungen SSB2 der zweiten Wagengruppe WG2 zu übermitteln, sodass die Slave-Schnellbremssteuereinrichtungen SSB2 der zweiten Wagengruppe WG2 die Bremskraft der ihnen zugeordneten Reibungsbremsen im Schnellbremsbetrieb bei Vorliegen der Reduktionsangabe RA2 reduzieren können.

Bezüglich der Ermittlung und Übertragung der zweiten Reduktionsangabe RA2 von der Master-Schnellbremssteuereinrichtung MSB2 zu den Slave-Schnellbremssteuereinrichtungen SSB2 und die Verarbeitung der zweiten Reduktionsangabe RA2 in den Slave-Schnellbremssteuereinrichtungen SSB2 gelten die obigen Ausführungen im Zusammenhang mit der ersten Reduktionsangabe RA1 und der ersten Wagengruppe WG1 entsprechend.

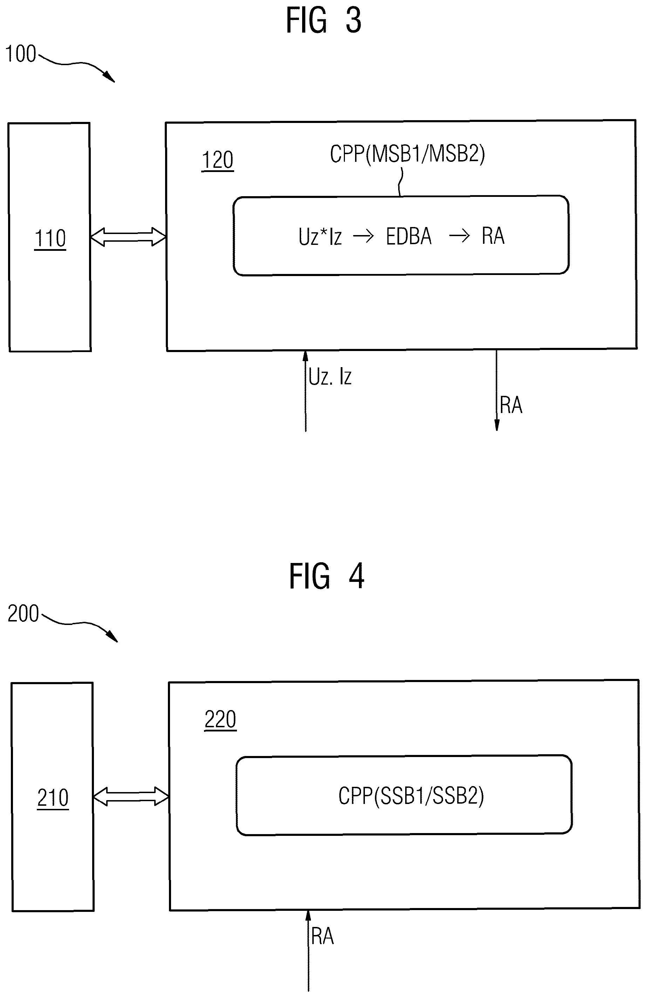

Die Figur 3 zeigt ein Ausführungsbeispiel für eine Master-Schnellbremssteuereinrichtung 100 näher im Detail. Die Master-Schnellbremssteuereinrichtung 100 umfasst eine Recheneinrichtung 110 und einen Speicher 120. In dem Speicher 120 ist ein Computerprogrammprodukt CPP abgespeichert. Das Computerprogrammprodukt CPP enthält Programmbefehle, die bei Ausführung durch die Recheneinrichtung 110 diese veranlassen, eine Master-Schnellbremssteuereinrichtung, beispielsweise die Master-Schnellbremssteuereinrichtung MSB1 oder MSB2 gemäß Figur 1, zu bilden und die Recheneinrichtung 110 veranlassen, eine aktuell erzeugte elektrodynamische Bremskraft eines oder mehr Triebwagen einer zugeordnete Wagengruppe angebende elektrodynamische Bremskraftangabe EDBA zu ermitteln, anhand dieser eine Reduktionsangabe RA zu ermitteln, die angibt, um wieviel der jeweiligen Wagengruppe zugeordnete Reibungsbremsen weniger gebremst werden müssen, als dies bei einem Ausfall der elektrodynamischen Bremskraft erforderlich wäre, und die Reduktionsangabe RA an Slave-Schnellbremssteuereinrichtungen, die den Reibungsbremsen der jeweiligen Wagengruppe zugeordnet sind, zu übermitteln.

Die Figur 4 zeigt ein Ausführungsbeispiel für eine Slave-Schnellbremssteuereinrichtung 200 für die Steuerung einer Wagengruppe, die einen oder mehr Triebwagen und einen oder mehr Laufwagen umfasst.

Die Slave-Schnellbremssteuereinrichtung 200 umfasst eine Recheneinrichtung 210 und einen Speicher 220. In dem Speicher 120 ist ein Computerprogrammprodukt CPP abgespeichert. Das Computerprogrammprodukt CPP enthält Programmbefehle, die bei Ausführung durch die Recheneinrichtung 210 diese veranlassen, eine Slave-Schnellbremssteuereinrichtung, beispielsweise die Slave-Schnellbremssteuereinrichtung SSB1 oder SSB2 gemäß Figur 1, zu bilden und die Recheneinrichtung 210 veranlassen, eine von einer Master-Schnellbremssteuereinrichtung empfangene Reduktionsangabe RA beim Ansteuern ihrer Reibungsbremsen zu berücksichtigen, indem sie deren Bremskraft entsprechend der Reduktionsangabe reduziert.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

### Bezugszeichenliste

- 100: Master-Schnellbremssteuereinrichtung
- 110: Recheneinrichtung
- 120: Speicher
- 200: Slave-Schnellbremssteuereinrichtung
- 210: Recheneinrichtung
- 220: Speicher

- A: Antrieb
- BG1-BG4: Betriebsbremsgerät
- CPP: Computerprogrammprodukt
- DB: Datenbus
- DV1: erste gruppenindividuelle Datenverbindung
- DV2: zweite gruppenindividuelle Datenverbindung
- EDBA: elektrodynamische Bremskraftangabe
- GZK: Gleichspannungszwischenkreis
- Iz: Motorstrom
- NW2: Nichttransformatorlaufwagen
- LW: Laufwagen
- MSB1: Master-Schnellbremssteuereinrichtung
- RA: Reduktionsangabe
- RA1: Reduktionsangabe
- RA2: Reduktionsangabe
- SBB: Schnellbremsbefehl
- SBG: Schnellbremssteuergerät
- SBG1: Schnellbremssteuergerät
- SBG2: Schnellbremssteuergerät
- SSB1: Slave-Schnellbremssteuereinrichtung
- SSB2: Slave-Schnellbremssteuereinrichtung
- SF: Schienenfahrzeug
- TF1: Transformatorlaufwagen
- TF2: Transformatorlaufwagen
- TR1: Triebwagen
- TR2: Triebwagen
- U: Umrichter
- Uz: Zwischenkreisspannung
- WG1: erste Wagengruppe
- WG2: zweite Wagengruppe

## Patentansprüche

1. Mehrgliedriges Schienenfahrzeug (SF),
**dadurch gekennzeichnet, dass**
- das Schienenfahrzeug (SF) eine erste Wagengruppe (WG1), die einen oder mehr Triebwagen (TR1) und einen oder mehr Laufwagen umfasst, sowie eine zweite Wagengruppe (WG2) aufweist,
- der ersten Wagengruppe (WG1) eine Master-Schnellbremssteuereinrichtung (MSB1) zugeordnet ist, die dazu ausgestaltet ist, bei Vorliegen eines Schnellbremsbefehls (SBB)
- eine die aktuell erzeugte elektrodynamische Bremskraft des oder der Triebwagen (TR1) der ersten Wagengruppe (WG1) angebende elektrodynamische Bremskraftangabe (EDBA) zu ermitteln,
- anhand dieser eine Reduktionsangabe (RA1) zu ermitteln, die angibt, um wieviel der ersten Wagengruppe (WG1) zugeordnete Reibungsbremsen weniger gebremst werden müssen, als dies bei einem Ausfall der elektrodynamischen Bremskraft erforderlich wäre, und
- die Reduktionsangabe (RA1) an Slave-Schnellbremssteuereinrichtungen (SSB1), die den Reibungsbremsen der ersten Wagengruppe (WG1) zugeordnet sind, zu übermitteln, und
- die den Reibungsbremsen zugeordneten Slave-Schnellbremssteuereinrichtungen (SSB1) dazu ausgestaltet sind, die Reduktionsangabe (RA1) bei der Ansteuerung der Reibungsbremsen zu berücksichtigen.

2. Schienenfahrzeug (SF) nach Anspruch 1,
**dadurch gekennzeichnet, dass**
die den Reibungsbremsen zugeordneten Slave-Schnellbremssteuereinrichtungen (SSB1) die Reduktionsangabe (RA1) bei der Ansteuerung ihrer Reibungsbremsen berücksichtigen, indem sie die Reduktionsangabe (RA1) von einer Sollvorgabe abziehen.

3. Schienenfahrzeug (SF) nach einem der voranstehenden Ansprüche,
**dadurch gekennzeichnet, dass**
die Master-Schnellbremssteuereinrichtung (MSB1) in dem oder einem der Triebwagen (TR1) der ersten Wagengruppe (WG1) angeordnet ist.

4. Schienenfahrzeug (SF) nach einem der voranstehenden Ansprüche,
**dadurch gekennzeichnet, dass**
die erste Wagengruppe (WG1) genau einen einzigen Triebwagen (TR1) umfasst.

5. Schienenfahrzeug (SF) nach einem der voranstehenden Ansprüche,
**dadurch gekennzeichnet, dass**
die Master-Schnellbremssteuereinrichtung (MSB1) als Softwaremodul in einem in dem Triebwagen (TR1) angeordneten Schnellbremssteuergerät (SBG1) ausgeführt ist.

6. Schienenfahrzeug (SF) nach einem der voranstehenden Ansprüche,
**dadurch gekennzeichnet, dass**
die erste Wagengruppe (WG1) genau zwei Wagen umfasst, nämlich einen Triebwagen (TR1) und einen daran angekoppelten Laufwagen, wobei in dem Laufwagen ein Transformator angeordnet ist, der elektrisch mit dem Triebwagen (TR1) in Verbindung steht.

7. Schienenfahrzeug (SF) nach einem der voranstehenden Ansprüche,
**dadurch gekennzeichnet, dass**
- die zweite Wagengruppe (WG2) einen oder mehr Triebwagen (TR2), einen oder mehr Laufwagen sowie eine zweite, unabhängig von der ersten Master-Schnellbremssteuereinrichtung (MSB1) arbeitende Master-Schnellbremssteuereinrichtung (MSB2) aufweist,
- wobei die zweite Master-Schnellbremssteuereinrichtung (MSB2) dazu ausgestaltet ist, bei Vorliegen des Schnellbremsbefehls (SBB)
- eine die aktuell erzeugte elektrodynamische Bremskraft des oder der Triebwagen (TR2) der zweiten Wagengruppe (WG2) angebende zweite elektrodynamische Bremskraftangabe (EDBA) zu ermitteln,
- anhand dieser eine zweite Reduktionsangabe (RA2) zu ermitteln, die angibt, um wieviel der zweiten Wagengruppe (WG2) zugeordnete Reibungsbremsen weniger gebremst werden müssen, als dies bei einem Ausfall der elektrodynamischen Bremskraft der zweiten Wagengruppe (WG2) erforderlich wäre, und
- die zweite Reduktionsangabe (RA2) an Slave-Schnellbremssteuereinrichtungen (SSB2), die den Reibungsbremsen der zweiten Wagengruppe (WG2) zugeordnet sind, zu übermitteln, und
- die Slave-Schnellbremssteuereinrichtungen (SSB2), die den Reibungsbremsen der zweiten Wagengruppe (WG2) zugeordnet sind, die zweite Reduktionsangabe (RA2) bei der Ansteuerung ihrer Reibungsbremsen berücksichtigen, indem sie die zweite Reduktionsangabe (RA2) von der Sollvorgabe abziehen.

8. Schienenfahrzeug (SF) nach einem der voranstehenden Ansprüche,
**dadurch gekennzeichnet, dass**
die zweite Wagengruppe (WG2) genau einen einzigen Triebwagen (TR2) umfasst.

9. Schienenfahrzeug (SF) nach einem der voranstehenden Ansprüche 1 bis 6, **dadurch gekennzeichnet, dass**
die zweite Wagengruppe (WG2) ausschließlich Laufwagen umfasst.

10. Schienenfahrzeug (SF) nach einem der voranstehenden Ansprüche,
**dadurch gekennzeichnet, dass**
das Schienenfahrzeug (SF) eine oder mehr dritte Wagengruppen aufweist,
- wobei jede der dritten Wagengruppen jeweils einen oder mehr Triebwagen, einen oder mehr Laufwagen sowie eine Master-Schnellbremssteuereinrichtung aufweist, und
- wobei die Master-Schnellbremssteuereinrichtungen der dritten Wagengruppen bezüglich der Erzeugung einer Reduktionsangabe jeweils vergleichbar arbeiten wie die Master-Schnellbremssteuereinrichtung (MSB1, MSB2) der ersten oder zweiten Wagengruppe (WG1, WG2), und
- wobei Slave-Schnellbremssteuereinrichtungen (SSB1) der dritten Wagengruppen die Reduktionsangabe jeweils bei der Ansteuerung ihrer Reibungsbremsen berücksichtigen, indem sie die Reduktionsangabe von der Sollvorgabe abziehen.

11. Schienenfahrzeug (SF) nach einem der voranstehenden Ansprüche,
**dadurch gekennzeichnet, dass**
den Slave-Schnellbremseinrichtungen für den Fall eines Schnellbremsens jeweils zumindest zwei unterschiedliche Bremskraft- oder Verzögerungsangaben zugeordnet sind, nämlich eine erste für den Fall, dass alle Wagen aktiv bremsen, und eine zweite für den Fall, dass alle Wagen bis auf einen aktiv bremsen.

12. Verfahren zum Bremsen eines mehrgliedrigen Schienenfahrzeugs (SF),
**dadurch gekennzeichnet, dass**
- bei Vorliegen eines Schnellbremsbefehls (SBB) eine elektrodynamische Bremskraftangabe (EDBA) ermittelt wird, die eine aktuell erzeugte elektrodynamische Bremskraft einer ersten Wagengruppe (WG1) eines mehr als eine Wagengruppe (WG1) aufweisenden Schienenfahrzeugs (SF) angibt,
- anhand dieser eine Reduktionsangabe (RA1) ermittelt wird, die angibt, um wieviel der ersten Wagengruppe (WG1) zugeordnete Reibungsbremsen weniger gebremst werden müssen, als dies bei einem Ausfall der elektrodynamischen Bremskraft der ersten Wagengruppe (WG1) erforderlich wäre,
- die Reduktionsangabe (RA1) an Slave-Schnellbremssteuereinrichtungen (SSB1), die den Reibungsbremsen der ersten Wagengruppe (WG1) zugeordnet sind, übermittelt wird, und
- die Slave-Schnellbremssteuereinrichtungen (SSB1) die Reduktionsangabe (RA1) bei der Ansteuerung der Reibungsbremsen berücksichtigen.

13. Master-Schnellbremssteuereinrichtung (MSB1),
**dadurch gekennzeichnet, dass**
die Master-Schnellbremssteuereinrichtung (MSB1) für die Steuerung einer Wagengruppe (WG1), die einen oder mehr Triebwagen (TR1) und einen oder mehr Laufwagen umfasst, derart ausgestaltet ist,
- dass sie eine aktuell erzeugte elektrodynamische Bremskraft des oder der Triebwagen (TR1) der Wagengruppe (WG1) angebende elektrodynamische Bremskraftangabe (EDBA) ermittelt,
- anhand dieser eine Reduktionsangabe (RA1) ermittelt, die angibt, um wieviel der Wagengruppe (WG1) zugeordnete Reibungsbremsen weniger gebremst werden müssen, als dies bei einem Ausfall der elektrodynamischen Bremskraft erforderlich wäre, und
- die Reduktionsangabe (RA1) an Slave-Schnellbremssteuereinrichtungen (SSB1), die den Reibungsbremsen der Wagengruppe (WG1) zugeordnet sind, übermittelt.

14. Slave-Schnellbremssteuereinrichtung (SMSB1),
**dadurch gekennzeichnet, dass**
die Slave-Schnellbremssteuereinrichtung (SSB1) für die Steuerung einer Wagengruppe (WG1), die einen oder mehr Triebwagen (TR1) und einen oder mehr Laufwagen umfasst, derart ausgestaltet ist, dass sie eine von einer Master-Schnellbremssteuereinrichtung (MSB1) empfangene Reduktionsangabe (RA1) beim Ansteuern ihrer Reibungsbremsen berücksichtigt, indem sie deren Bremskraft entsprechend der Reduktionsangabe (RA1) reduziert.

15. Computerprogrammprodukt (CPP),
**dadurch gekennzeichnet, dass**
das Computerprogrammprodukt (CPP) Programmbefehle enthält, die bei Ausführung durch eine Recheneinrichtung (110, 210) diese veranlassen, eine Master-Schnellbremssteuereinrichtung (MSB1), insbesondere eine solche nach Anspruch 13, oder eine Slave-Schnellbremssteuereinrichtung, insbesondere nach Anspruch 14, zu bilden.
